# EUROPÄISCHE PATENTSCHRIFT

(11) **EP 1 101 559 B1**
(45) Veröffentlichungstag und Bekanntmachung des Hinweises auf die Patenterteilung: **29.11.2006**
(21) Anmeldenummer: 00122769.3
(22) Anmeldetag: 19.10.2000
(51) Int. Cl.: B23K 1/00, B23K 35/38, B23K 9/16, B23K 31/02

(54) **Verfahren zum MSG-Löten mit Verwendung eines aktiven Schutzgases**
MIG/MAG soldering method with the use of protective active gas
Méthode de brasage MIG/MAG avec utilisation d'un gaz de protection actif

(30) Priorität: 28.10.1999 DE 19952043
(43) Veröffentlichungstag der Anmeldung: 23.05.2001
(73) Patentinhaber: Linde AG, 65189 Wiesbaden (DE)
(72) Erfinder: Tischler, Friedrich, 4650 Lambach (AT)
(74) Vertreter: Obermüller, Bernhard

(56) Entgegenhaltungen:
- EP-A- 0 544 187
- EP-A- 0 639 423
- WO-A-00/24545
- WO-A-98/21000
- DE-A- 19 711 955
- US-A- 2 789 065
- PATENT ABSTRACTS OF JAPAN vol. 1998, no. 01, 30. Januar 1998 (1998-01-30) & JP 09 248668 A (KYODO SANSO KK), 22. September 1997 (1997-09-22)

## Beschreibung

Die Erfindung betrifft ein Verfahren zum MSG-Löten von metallischen Werkstoffen unter Verwendung von Lotwerkstoffen gemäß dem Oberbegriff des Anspruchs 1 (siche, z.B. JP-A-91 248 668).

In der industriellen Anwendung hat sich das Schweißen zum Verbinden von metallischen Werkstücken seit langem etabliert. Beim Schweißen werden die zu verbindenden Werkstücke aufgeschmolzen.

Beim Metall-Schutzgas-Schweißen (MSG-Schweißen) brennt ein Lichtbogen in einem Schutzgasmantel. Als Verfahrensvarianten des MSG-Schweißens werden vor allem einerseits mit abschmelzender Elektrode das Metall-Inertgas-Schweißen (MIG-Schweißen) bzw. das Metall-Aktivgas-Schweißen (MAG-Schweißen) und andererseits das Wolfram-Inertgas-Schweißen (WIG-Schweißen) mit nicht abschmelzender Elektrode eingesetzt. Ferner stellt das Wolfram-Plasma-Schweißen (WP-Schweißen) eine zusätzliche Verfahrensvariante des MSG-Schweißens mit nicht abschmelzender Elektrode dar. Die zum MSG-Schweißen erforderlichen Anlagen und Geräte sind in Fachkreisen wohlbekannt.

Aber trotz der Fülle der inzwischen entwickelten und zur Verfügung stehenden Schweißverfahren mit Varianten bieten sich Anwendungsmöglichkeiten für das Löten als Alternative zum Schweißen.

So bringt beispielsweise das Schweißen von verzinkten, aluminierten oder anderweitig beschichteter Werkstücke Probleme mit sich. So stören die beim Verbinden von verzinkten Blechen durch den niedrigen Zink-Verdampfungspunkt entstehenden Gase den Lichtbogen beim Schweißen und führen zu Instabilitäten des Lichtbogens. Daraus resultieren Poren und Schweißspritzer.

Als effiziente und auch kostengünstige Alternative zu herkömmlichen Schweißtechniken werden daher das MIG- und WIG-Löten eingesetzt. Als Löten wird ein thermisches Verfahren zum stoffschlüssigen Fügen von Werkstoffen bezeichnet, wobei eine flüssige Phase durch Schmelzen eines Lotes (Lotwerkstoff) entsteht. Beim Löten wird im Gegensatz zum Schweißen die Solidustemperatur der zu verbindenden Werkstücke nicht erreicht.

Das MIG- bzw. WIG-Löten ist ein Hartlötverfahren, bei welchem die Lötverbindung unter Einsatz von MIG- bzw. WIG-Schutzgasschweißgeräten hergestellt wird. Beim MIG- bzw. WIG-Löten wird nicht der Grundwerkstoff aufgeschmolzen, sondern eine Hartlötverbindung der Werkstücke hergestellt. Die eingesetzten Lotwerkstoffe besitzen verhältnismäßig niedrige Schmelzpunkte in der Größenordnung von bis zu etwa 1000°C (z.B. 600 bis 700°C).

Beim MIG- bzw. WIG-Löten wird üblicherweise als Schutzgas Argon, Helium oder ein Gemisch aus Argon und Helium eingesetzt

Aber auch beim MSG-Löten unter inerten Schutzgasen (MIG- bzw. WIG-Löten) treten mitunter Probleme auf. Es kommt beispielsweise immer noch zu Lichtbogeninstabilitäten, die deutliche Qualitätseinbußen mit sich bringen.

Der vorliegenden Erfindung liegt daher die Aufgabe zugrunde, ein Verfahren zum MSG-Löten der eingangs genannten Art aufzuzeigen, welches eine Verbesserung des MSG-Lötens erlaubt. Insbesondere soll mit der Erfindung beim MSG-Löten ein stabiler Lichtbogen, eine höhere Verarbeitungsgeschwindigkeit und eine hohe Qualität der Lötverbindung erreicht werden.

Diese Aufgabe wird erfindungsgemäß durch die im Anspruch 1 definierten Schitte/Merkmale gelöst.

Überraschenderweise hat sich nämlich gezeigt, daß durch Zumischung zumindest einer Aktivgaskomponente zu einer oder mehreren inerten Gaskomponenten des Schutzgases das MSG-Löten in der gewünschten Weise verbessert werden kann.

Die Erfindung umfaßt Verfahrensvarianten des MSG-Lötens mit abschmelzender Elektrode (MIG- bzw. MAG-Löten) und mit nicht abschmelzender Elektrode (WIG- und WP-Löten).

Da das Schutzgas neben Inertgas oder Inertgasen zumindest eine Aktivgaskomponente aufweist, könnte beim erfindungsgemäßen Verfahren zum MSG-Löten mit abschmelzender Elektrode gegenüber dem bekannten MIG-Löten unter (lediglich) inerten Schutzgasen hier von einem MAG-Löten oder auch MIG-MAG-Löten gesprochen werden. Für das WIG-Löten und das WP-Löten existieren entsprechende eingeführte, die Verwendung von Aktivgasen ansprechende Abkürzungen aus der Schweißtechnik nicht.

Als Aktivgaskomponenten werden Sauerstoff und/oder Kohlendioxid eingesetzt. Dies ist in sofern überraschend, als dem Schutzgas beim Löten gerade die Aufgabe zukommt, eine Bildung von Oxiden während des Lötprozesses ausreichend zu verhindern (vgl. beispielsweise DIN 8505). Es hat sich aber gezeigt, daß durch die erfindungsgemäße Zugabe von Aktivgas zum inerten Schutzgas eine höhere Verarbeitungsgeschwindigkeit und ein stabiler Lichtbogen bei hoher Qualität der Lotverbindung beim MSG-Löten erreicht werden kann.

Die Zugabe an Aktivgas darf jedoch nicht zu groß werden, damit das Gasgemisch die Aufgabe als Schutzgas erfüllen kann. Bei den Verfahrensvarianten mit nicht abschmelzender Elektrode (WIG-Löten und WP-Löten) ist der Aktivgasanteil im Schutzgas auch begrenzt, da es bei zu hohen Aktivgasanteilen im Schutzgas zu Beschädigungen der Elektroden kommen kann. Für das MSG-Löten gemäß des Erfindung haben sich Schutzgasgemische mit einem Aktivgasanteil von 0,01 bis 0,5 Vol.-%, vorzugsweise von 0,01 bis 0,2 Vol.-%, besonders bevorzugt von 0,02 bis 0,1 Vol.-% bewährt. Im Rahmen der Erfindung kann bei einem Schutzgas mit Sauerstoff und Kohlendioxid der Sauerstoffanteil im Schutzgasgemisch gleich, größer oder kleiner gewählt werden als der Kohlendioxidanteil.

Als Inertgase für das Schutzgas eignen sich Argon und Helium. Das Gasgemisch enthält Inertgas Argon und 0 bis 50 Vol.-% Helium, vorzugsweise 10 bis 40 Vol.-% Helium.

Gemäß der Erfindung, enthält der als Lot verwendete Zusatzwerkstoff Kupfer (Cu). Vorzugsweise werden als Lotwerkstoffe Aluminium-Bronze-Legierungen (Al Bz) verwendet, beispielsweise Al Bz 10 Fe, Al Bz 8 und dergleichen).

Beim erfindungsgemäßen Verfahren zum MSG-Löten können als metallische Werkstoffe un-, niedrig- oder hochlegierte Stähle, insbesondere Chrom-Nickel-Stähle (CrNi-Stähle), Kupfer (Cu) und Cu-haltige Werkstoffe, insbesondere Cu-haltige Nichteisenmetalle, verwendet werden. Die mittels MSG-Lötens zu bearbeitenden metallischen Werkstoffe können dabei beschichtet (z.B. Zink oder Aluminium enthaltende Beschichtungen) oder auch unbeschichtet sein.

Das MSG-Löten gemäß der Erfindung zeichnet sich dadurch aus, daß bei verhältnismäßig niedrigen Kosten eine Lotverbindung mit geringerer Wärmeeinbindung und unter geringerem Verzug hergestellt werden kann.

In der Erfindung sind als Lichtbogen-Arten beim MSG-Löten mit abschmelzender Elektrode vor allem der Kurz- und Impulslichtbogen eingesetzt.

Mit dem erfindungsgemäßen MSG-Löten steht ein Verfahren mit reproduzierbar hoher Qualität zur Verfügung. Das MSG-Löten eignet sich für unterschiedliche Nahtgeometrien, beispielsweise Kehl- oder Überlappnähte, ist aber auch für Ecknahtverbindung einsetzbar. Zusätzlich können größere Toleranzen zugelassen werden, da sich geringe Luftspalte beim MSG-Löten sehr gut auffüllen lassen.

## Patentansprüche

1. Verfahren zum MSG-Löten von metallischen Werkstoffen unter Verwendung von Lotwerkstoffendie Kupfer enthalten, und eines elektrischen Lichtbogens mit abschmelzender Elektrode, wobei das Schutzgas Argon und weiterhin zumindest eine Aktivgaskomponente enthält, und wobei als Aktivgas Sauerstoff, Kohlendioxid oder ein Gemisch aus Sauerstoff und Kohlendioxid eingesetzt wird, **dadurch gekennzeichnet, daß** das Schutzgas aus 0,01 bis 0,5 Vol.-% Sauerstoff oder/und Kohlendioxid und weiterhin aus 10 bis 50 Vol.-% Helium und im übrigen aus Argon besteht, wobei zum MSG-Löten mit abschmelzender Elektrode als Lichtbogenarten der Kurzlichtbogen oder der lmpulslichtbogen eingesetzt werden.

2. Verfahren nach Anspruch 1, **dadurch gekennzeichnet, daß** das Schutzgas einen Aktivgasanteil von 0,01 bis 0,2 Vol.-%, vorzugsweise von 0,02 bis 0,1 Vol.-% aufweist.

3. Verfahren nach Anspruch 1 oder 2, **dadurch gekennzeichnet, daß** das Schutzgas 10 bis 40 Vol.-%Helium enthält.

4. Verfahren nach einem der Ansprüche 1 bis 4, **dadurch gekennzeichnet, daß** der Lotwerkstoff Aluminium-Bronzen (Al Bz) enthält.

5. Verfahren nach einem der Ansprüche 1 bis 5, **dadurch gekennzeichnet, daß** als metallische Werkstoffe un-, niedrig- oder hochlegierte Stähle, insbesondere CrNi-Stähle, Kupfer und Cu-haltige Werkstoffe verwendet werden.

## Claims

1. Process for the GMA soldering of metallic materials using solder materials which contain copper and an electric arc with consumable electrode, the shielding gas containing argon and also at least one active gas component, and the active gas used being oxygen, carbon dioxide or a mixture of oxygen and carbon dioxide, **characterized in that** the shielding gas consists of 0.01 to 0.5% by volume oxygen and/or carbon dioxide and also 10 to 50% by volume helium, remainder argon, in which process for GMA soldering with consumable electrode the types of arc used are the short arc or the pulsed arc.

2. Process according to Claim 1, **characterized in that** the shielding gas has an active gas content of 0.01 to 0.2% by volume, preferably of 0.02 to 0.1% by volume.

3. Process according to Claim 1 or 2, **characterized in that** the shielding gas contains 10 to 40% by volume helium.

4. Process according to any of Claims 1 to 3, **characterized in that** the solder material contains aluminium-bronzes (AlBz).

5. Process according to any of Claims 1 to 4, **characterized in that** the metallic materials used are unalloyed, low-alloy or high-alloy steels, in particular CrNi steels, copper and Cu-containing materials.

## Revendications

1. Procédé de soudage MSG de matériaux métalliques par recours à des matériaux de soudage qui contiennent du cuivre et à un arc électrique à électrode fusible, dans lequel le gaz de protection contient de l'argon et en outre °au moins un composant de gaz actif, de l'oxygène, du dioxyde de carbone ou un mélange d'oxygène et de dioxyde de carbone étant utilisés comme gaz actif, **caractérisé en ce que** le gaz de protection est constitué de 0,01 à 0,5 % en volume d'oxygène et/ou de dioxyde de carbone et en outre de 10 à 50 % en volume d'hélium, le reste étant constitué d'argon, et dans lequel pour le soudage MSG à électrode fusible, on utilise comme type d'arc lumineux un arc lumineux court ou un arc lumineux à impulsions.

2. Procédé selon la revendication 1, **caractérisé en ce que** le gaz de protection présente une teneur en gaz actif de 0,01 à 0,2 % en volume et de préférence de 0,02 à 0,1 % en volume.

3. Procédé selon les revendications 1 ou 2, **caractérisé en ce que** le gaz de protection contient de 10 à 40 % en volume d'hélium.

4. Procédé selon l'une des revendications 1 à 3, **caractérisé en ce que** le matériau de soudage contient un bronze à l'aluminium (Al-Bz).

5. Procédé selon l'une des revendications 1 à 4, **caractérisé en ce que** comme pièces métalliques, on utilise des aciers non alliés, faiblement alliés ou fortement alliés et en particulier des aciers au Cr-Ni, ainsi que du cuivre et des matériaux qui contiennent du Cu.
